# EUROPÄISCHE PATENTSCHRIFT

(11) **EP 0 634 303 B1**
(45) Veröffentlichungstag und Bekanntmachung des Hinweises auf die Patenterteilung: **08.10.1997**
(21) Anmeldenummer: 94110709.6
(22) Anmeldetag: 09.07.1994
(51) Int. Cl.: B60N 2/44

(54) **Verkleidung für die Rückenlehne eines Kfz-Sitzes**
Cover for the backrest of a motor vehicle seat
Revêtement pour le dossier d'une siège de véhicule automobile

(30) Priorität: 16.07.1993 DE 9310641 U
(43) Veröffentlichungstag der Anmeldung: 18.01.1995
(73) Patentinhaber: SEEBER SYSTEMTECHNIK KG GERNSBACH, D-76593 Gernsbach (DE)
(72) Erfinder: Döhler, Jochen, D-76593 Gernsbach (DE)
(74) Vertreter: Lichti, Heiner, Dipl.-Ing.

(56) Entgegenhaltungen:
- EP-A- 0 359 429
- FR-A- 2 573 371
- FR-A- 2 580 562
- US-A- 2 105 997
- US-A- 4 059 306

## Beschreibung

Die Erfindung betrifft eine Verkleidung für die Rückenlehne eines Kfz-Sitzes, bestehend aus einem formstabilen, die Polsterung der Rückenlehne rückseitig abdeckenden Formteil, das an seinem unteren Ende eine unter dem Sitz nach vorne greifende Verlängerung aufweist.

Formteile für solche Verkleidungen sind in der Regel aus einem matten- oder plattenförmigen Material durch Formpressen hergestellt. Dabei wird das Material zur Erhöhung der Stabilität, wie auch zur Erfüllung funktioneller Aufgaben entsprechend konturiert. Eine solche Verkleidung hat in erster Linie die Aufgabe, die Polsterung und Funktionsteile in der Rückenlehne des Sitzes rückseitig zu verblenden und zugleich eine einwandfreie Oberfläche zu schaffen. Ferner dient das Formteil als Stütze für die Polsterung. Schließlich weist das Formteil häufig Mittel auf, die das unmittelbare Anbinden des Bezugs der Rückenlehne gestatten. Sehr häufig bestehen die Formteile aus einem gepreßten Fasermaterial, das mit einer Folien- oder Teppichkaschierung versehen ist.

Das Formteil läuft an seinem unteren Ende so aus, daß die durch den Dreh-Kippeschlag möglichen Bewegungen der Rückenlehne nicht behindert werden; es endet also unmittelbar im Bereich der Unterseite der Rückenlehne oder ist in den Raum zwischen Rückenlehne und Sitz-Oberfläche hineingeführt. Von Nachteil ist hierbei, daß die insbesondere bei Komfortsitzen vielfältigen Funktionsteile im hinteren Bereich der Sitzfläche und unterhalb derselben sichtbar und zugänglich sind. Um eine einwandfreie Optik und einen Schutz für die Fondpassagiere zu erhalten, wird deshalb in der Regel der Bezug der Sitzfläche oder eine hieran angebrachte Folie am hinteren Ende der Sitzfläche nach unten gezogen und entsprechend verspannt. Dies ist umständlich und kostenintensiv. Es hindert auch nicht daran, daß ein Fondpassagier die Füße unterhalb der Sitzfläche verklemmt oder mit den Füßen hängen bleibt. Auch lassen sich nicht alle Funktionsteile mit dieser Maßnahme schützen bzw. verkleiden.

Aus der gattungsbildenden US-A-4 059 306 ist ein Kfz-Sitz mit einer formstabilen Verkleidung der Rückenlehne bekannt, die mit einem oberen Abschnitt die Rückenlehne rückseitig abdeckt und mit einem unteren Abschnitt unter den Rahmen des Sitzes nach vorne greift. Die Verkleidung ist als starres Bauteil ausgebildet, wobei der untere Abschnitt relativ zum oberen Abschnitt umgebogen ist. Mit einer derartigen starren Verkleidung lassen sich die Funktionsteile bei einem Sitz mit schwenkbarer Rückenlehne nicht in allen Schwenkstellungen zuverlässig abdecken und bei Maßabweichungen der Sitzkonstruktionen läßt sich die Abdeckung nicht oder nur schwer anpassen.

Der Erfindung liegt die Aufgabe zugrunde, eine einwandfreie Verblendung der gesamten Rückseite des Sitzes zu ermöglichen.

Diese Aufgabe wird erfindungsgemäß dadurch gelöst, daß die Verlängerung flexibel und im wesentlichen plattenförmig ausgebildet und mit mehreren, im wesentlichen parallel zu einer Drehachse der Rückenlehne des Sitzes verlaufenden Biegerillen versehen ist.

Durch die erfindungsgemäße Ausbildung des Formteils mit der unter den Sitz greifenden Verlängerung ergibt sich zunächst an der Rückseite des Sitzes eine einwandfreie, gleichmäßige Optik. Es können zudem alle im hinteren Bereich des Sitzes hinter und unterhalb der Sitzfläche, vorhandenen Funktionsteile durch die Verlängerung abgedeckt werden, so daß Fondpassagiere mit ihren Füßen nicht an diese Teile gelangen können. Da die Verlängerung zudem flexibel ist, ist auch ein Verklemmen oder Einhängen mit den Füßen ausgeschlossen bzw. kann sich der Fondpassagier problemlos wieder befreien. Schließlich wird auch weitgehend vermieden, daß Gegenstände, die im Fond auf den Boden fallen, unter die Sitzfläche fallen und nicht oder nur mit großen Umständen wieder auffindbar sind. Aus diesem Grunde kann die Verkleidung beispielsweise mit ihrer Unterkante dem Fahrzeugboden aufliegen. Damit ist es ferner möglich, auf einen Teppichbelag in diesem Bereich zu verzichten. Aufgrund der flexiblen Ausbildung kann die Verlängerung der Schwenkbewegung der Rückenblende behinderungsfrei folgen.

Die Biegerillen bringen den Vorteil mit sich, daß die von Hause aus an sich nicht gegebene Flexibilität des Formteils durch einfache Formvorgänge erzielt werden kann, wobei das Ausmaß der Flexibilität durch entsprechende Gestaltung und Anordnung der Biegerillen beeinflußt werden kann. Diese Flexibilität ist insbesondere so auszulegen, daß die Verlängerung den möglichen Kippbewegungen der Rückenlehne zwischen der Sitz- und der Liegestellung folgen kann.

Vorzugsweise deckt die Verlängerung sämtliche nach hinten weisenden Sichtflächen der Beschläge und sonstigen Funktionsteile der Sitzkonstruktion ab. Dies gilt insbesondere auch für die seitlich liegenden Beschläge, die bisher durch eigene Kunststofformteile abgedeckt werden mußten.

Mit der erfindungsgemäßen Ausbildung der Verkleidung lassen sich also neben den optischen und technischen Vorteilen auch erhebliche Kosteneinsparungen erzielen.

Von Vorteil bestehen das Formteil und die Verlängerung aus dem gleichen Werkstoff, weisen jedoch verschiedenes Biegeverhalten auf. Auf diese Weise ist es möglich, die gesamte Verkleidung einstückig in herkömmlicher Formtechnik zu fertigen.

Mit Vorteil weist die Verlängerung eine anläßlich der Herstellung des Formteils erzeugte Krümmung auf, deren Zentrum im wesentlichen Parallel zur Drehachse des Sitzes liegt. Die Krümmung der Verlängerung wird also anläßlich des Fertigungsprozeßes erzeugt.

Dabei gibt es verschiedene Maßnahmen zur Erzielung der Krümmung. Beispielsweise können die Biegerillen so angelegt sein, daß die Krümmung sich im wesentlichen selbsttätig einstellt. Statt dessen ist es auch möglich, die Verkleidung mehrschichtig, z.B. aus einem Trägermaterial und einer Kaschierung - wie bei solchen Formteilen üblich - zu bilden und die Schichten so auszubilden und/oder anzubringen, daß sich die Krümmung anläßlich der Fertigung selbsttätig einstellt.

Es ist ferner möglich, die Verlängerung an ihrem freien Ende über elastische Elemente, z.B. Federn, Gummischnüre, oder dergleichen an der Sitzkonstruktion anzuhängen, so daß die Verkleidung stets positioniert ist.

Nachstehend ist die Erfindung anhand eines in der Zeichnung wiedergegebenen Ausführungsbeispiels beschrieben. In der Zeichnung zeigen:
- Figur 1:: eine schematische Seitenansicht eines Kfz-Sitzes;
- Figur 2:: eine Ansicht auf die Verkleidung vor der Montage am Sitz;
- Figur 3:: einen Schnitt III-III gemäß Figur 2;
- Figur 4:: die Einzelheit IV in Figur 3 in vergrößertem Maßstab und
- Figur 5:: eine der Figur 3 entsprechende Ansicht einer abgewandelten Ausführungsform der Verkleidung unmittelbar vor ihrer Montage.

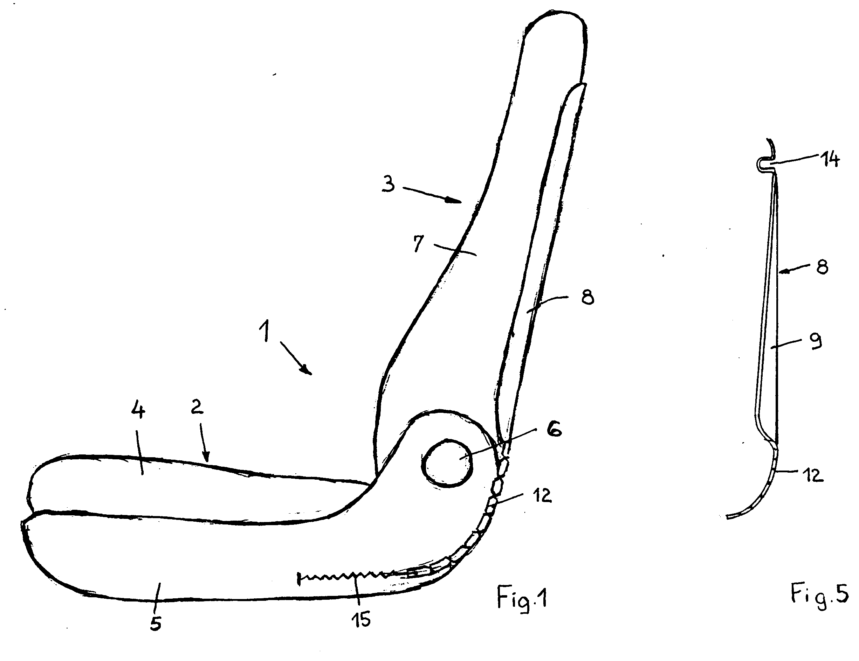

Der in Figur 1 schematisch wiedergegebene Kfz-Sitz 1 weist ein Sitzteil 2 und eine Rückenlehne 3 auf, wobei auf die Darstellung von Einzelheiten des Sitzgestells und der Sitzmechanik - da nicht zur Erfindung gehörig, im übrigen aber bekannt - verzichtet worden ist.

Das Sitzteil 2 weist ein Sitzpolster 4 und dieses aufnehmende Seitenwangen 5 auf, an denen die Rückenlehne 3 über ein festsetzbares Drehgelenk 6 schwenkbar gelagert ist. Die Rückenlehne 3 weist ein Rückenpolster 7 und eine rückseitige Verkleidung 8 auf, die die Polsterung nach hinten abdeckt und in die der Bezugsstoff des Rückenpolsters 7 eingespannt sein kann.

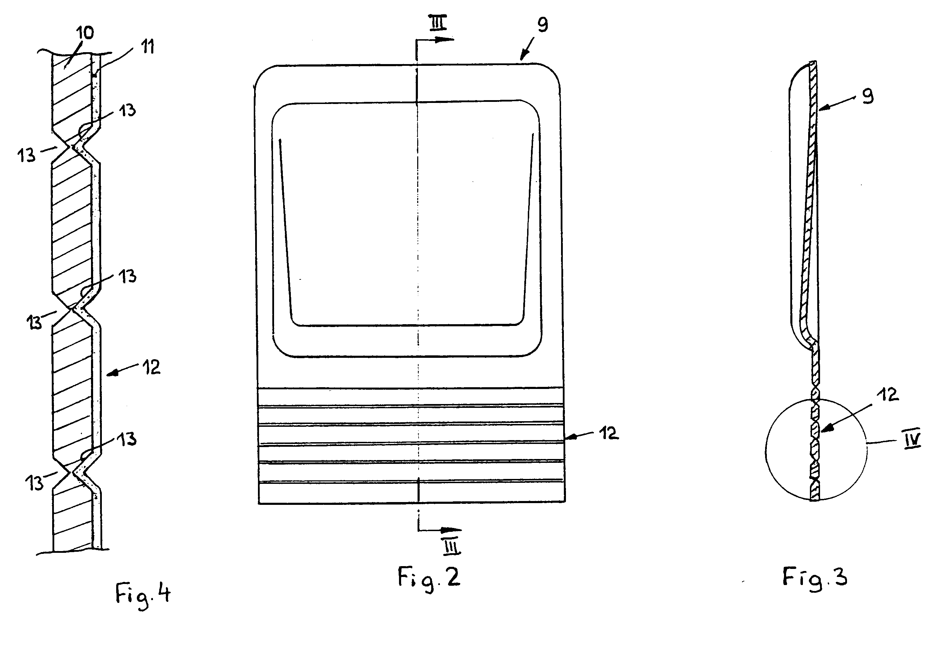

Die Verkleidung 8 ist von einem Formteil 9 gebildet, das in den Figuren 2 bis 5 näher gezeigt ist. Das Formteil 9 weist beispielsweise ein durch Formpressen aus einem Fasermaterial erhaltenes Trägermaterial 10 (Figur 4) auf, das an seiner im Gebrauchszustand die Sichtseite bildenden Fläche mit einer dekorativen Kaschierung 11 versehen ist. Um die notwendige Formstabilität zu erhalten, kann - ausgehend von einem platten- bzw. mattenförmigen Fasermaterial - dem Trägerteil 10 eine schalenförmige Kontur gegeben werden, wie dies Figur 2 und 3 zeigen. Das Formteil 9 weist an seiner Unterkante eine mit ihm einstückige Verlängerung 12 auf, die im Gegensatz zu dem größeren schalenförmigen Bereich des Formteils jedoch flexibel ist. Es ist im Ausgangszustand, wie Figur 3 zeigt, im wesentlichen eben bzw. plattenförmig ausgebildet und weist auch im wesentlichen die gleiche Wandstärke auf wie das Formteil. Um die gewünschte Flexibilität zu erhalten, ist die Verlängerung 12 zumindest an ihrer einen Seite, vorzugsweise an beiden Seiten mit Biegerillen 13 versehen, die im wesentlichen parallel zu der durch das Drehgelenk 6 vorgegebenen Drehachse des Kfz- Sitzes 1 verlaufen. Im Bereich der Biegerillen 13 ist der Querschnitt des Trägerteils 10 derart reduziert, daß die Verlängerung 12 ihre Steifigkeit verliert und flexibel wird. Im gezeigten Ausführungsbeispiel ist die aufkaschierte Schicht 11 in die Biegerillen 13 eingeformt.

Die Biegerillen 13 können derart angelegt und die Kaschierung 11 gegebenenfalls derart aufgebracht sein, daß die Verlängerung 12 bereits anläßlich ihrer Herstellung vorgekrümmt ist, wie dies in Figur 5 gezeigt ist. In dieser Darstellung ist auch eine Rille 14 mit Abstand von der Oberkante des Formteils 9 erkennbar, die gegebenenfalls durch entsprechende Rillen mit Abstand von der Seitenkante ergänzt wird. In diese Rillen kann der Bezugsstoff des Polsters 7 der Rückenlehne 3 eingezogen und durch entsprechende nach innen offene Aussparungen auf die Innenseite der Verkleidung 8 hineingezogen und fixiert werden.

Die Verkleidung 8, die in üblicher Weise mit der Rückenlehne 3 verbunden ist, ragt mit der vorgekrümmten Verlängerung 12 nach unten über das Drehgelenk 6 hinweg und greift unter den Sitz 2, so daß der gesamte hintere Bereich des Sitzes von dem Formteil 9 und seiner Verlängerung 12 abgedeckt ist. Gegebenenfalls kann die Verlängerung 12 noch durch elastische Elemente 15, z.B. Federn, Gummischnüre oder dergleichen, an der Unterseite des Sitzteils 2 befestigt werden. Durch die flexible Ausbildung der Verlängerung 12 folgt diese problemlos jeder Neigung der Rückenlehne 3, ohne dabei ihre abdeckende Funktion für den rückwärtigen Bereich des Sitzteils 2 zu verlieren. Die Verlängerung 12 kann insbesondere so ausgebildet sein, daß sie auch die innerhalb der Seitenwangen 5 liegenden Teile des Beschlags für das Drehgelenk 6 abdeckt.

## Patentansprüche

1. Verkleidung für die Rückenlehne eines Kfz-Sitzes, bestehend aus einem formstabilen, die Polsterung der Rückenlehne rückseitig abdeckenden Formteil (9), das an seinem unteren Ende eine unter den Sitz (1) nach vorne greifende Verlängerung (12) aufweist, dadurch gekennzeichnet, daß die Verlängerung (12) flexibel und im wesentlichen plattenförmig ausgebildet und mit mehreren, im wesentlichen parallel zu einer Drehachse der Rückenlehne (3) des Sitzes (1) verlaufenden Biegerillen (13) versehen ist.

2. Verkleidung nach Anspruch 1, dadurch gekennzeichnet, daß die Verlängerung (12) sämtliche nach hinten weisende Sichtflächen der Beschläge und sonstigen Funktionsteile der Sitzkonstruktion abdeckt.

3. Verkleidung nach Anspruch 1 oder 2, dadurch gekennzeichnet, daß das Formteil (9) und die Verlängerung (12) aus dem gleichen Werkstoff bestehen, jedoch verschiedenes Biegeverhalten aufweisen.

4. Verkleidung nach einem der Ansprüche 1 bis 3, dadurch gekennzeichnet, daß die Verlängerung (12) eine Krümmung aufweist, deren Zentrum im wesentlichen parallel zur Drehachse der Rückenlehne (3) liegt.

5. Verkleidung nach Anspruch 4, dadurch gekennzeichnet, daß die Biegerillen (13) so angelegt sind, daß die Krümmung anläßlich der Herstellung des Formteils (9) entsteht.

6. Verkleidung nach Anspruch 4, dadurch gekennzeichnet, daß die Verkleidung (8) mehrschichtig, z.B. aus einem Trägermaterial (10) und einer Kaschierung (11), gebildet ist und die Schichten so ausgebildet und/oder angebracht sind, daß die Krümmung anläßlich der Herstellung des Formteils (9) entsteht.

7. Verkleidung nach einem der Ansprüche 1 bis 6, dadurch gekennzeichnet, daß die Verlängerung (12) an ihrem unteren freien Ende über elastische Elemente (15) an der Sitzkonstruktion angehängt ist.

## Claims

1. Cover for the backrest of a motor vehicle seat, comprising a dimensionally stable moulding (9) covering the back of the backrest upholstery and which has at its lower end an extension (12) forwardly engaging under the seat (1), characterized in that the extension (12) is constructed in a flexible and substantially plate-like manner and is provided with several bending grooves (13) running substantially parallel to a rotation axis of the backrest (3) of the seat (1).

2. Cover according to claim 1, characterized in that the extension (12) covers all rearwardly directed visible surfaces of the fittings and other functional parts of the seat structure.

3. Cover according to claim 1 or 2, characterized in that the moulding (9) and the extension (12) are made from the same material, but having different bending behaviours.

4. Cover according to one of the claims 1 to 3, characterized in that the extension (12) has a curvature, whose centre is substantially parallel to the rotation axis of the backrest (3).

5. Cover according to claim 4, characterized in that the bending grooves (13) are applied in such a way that the curvature is obtained during the manufacture of the moulding (9).

6. Cover according to claim 4, characterized in that the cover (8) is in multilayer form, e.g. a support material (10) and a backing (11) and the layers are so constructed and/or applied, that the curvature is obtained during the manufacture of the moulding.

7. Cover according to one of the claims 1 to 6, characterized in that at its lower, free end, the extension (12) is suspended by means of elastic elements (15) on the seat structure.

## Revendications

1. Revêtement pour le dossier d'un siège de véhicule automobile, consistant en une préforme (9) indéformable recouvrant par l'arrière le rembourrage du dossier, présentant à son extrémité inférieure une prolongation (12) s'accrochant sous le siège vers l'avant, caractérisé en ce que la prolongation est souple et de forme générale en panneau et comporte plusieurs fentes de pliage s'étendant parallèles à un axe de pivotement du dossier (3) du siège (1).

2. Revêtement selon la revendication 1, caractérisé en ce que la prolongation (12) recouvre par l'arrière toutes les surfaces visibles des pièces de garnissage et d'autres pièces fonctionnelles de la structure du siège.

3. Revêtement selon l'une quelconque des revendications 1 ou 2, caractérisé en ce que la préforme (9) et la prolongation (12) sont réalisées dans le même matériau, mais présentent des comportements différents au pliage.

4. Revêtement selon l'une quelconque des revendications précédentes, 1 à 3, caractérisé en ce que la prolongation présente une courbure dont le centre est sensiblement parallèle à l'axe de pivotement du dossier (3).

5. Revêtement selon la revendication 4, caractérisé en ce que les fentes de pliage (13) sont disposées de façon à former la courbure lors de la fabrication de la préforme (9).

6. Revêtement selon la revendication 4, caractérisé en ce que le revêtement (8) consiste en plusieurs couches, par exemple un matériau support (10) et une doublure (11) et en ce que les couches sont conformées et/ou disposées de façon à former la courbure lors de la fabrication de la préforme (9).

7. Revêtement selon l'une quelconque des revendications 1 à 6, caractérisé en ce que la prolongation (12) est suspendue par son extrémité libre inférieure à la structure du siège au moyen d'éléments élastiques (15).
